# EUROPÄISCHE PATENTANMELDUNG

(11) **EP 4 647 827 A1**
(43) Veröffentlichungstag der Anmeldung: **12.11.2025**
(21) Anmeldenummer: 24174720.3
(22) Anmeldetag: 08.05.2024
(51) Int. Cl.: G02B 6/52, G02B 6/54, H02G 1/08

(54) **INNENROHR-VERKLEMMUNG ALS BASIS ZUM EINBRINGEN EINES EINBRINGELEMENTS IN EIN LEITUNGSROHR**

(71) Anmelder: Zeitler AG, 6206 Neuenkirch (CH)
(72) Erfinder: Zeitler, Markus, 6206 Neuenkirch (CH)
(74) Vertreter: Stolmár & Partner Intellectual Property GmbH

(57) **Zusammenfassung**

Die erfindungsgemässe Innenrohr-Verklemmung eines Leitungsrohrs (25) dient als Basis zum Einbringen eines Einbringelements in ein Leitungsrohr (25), wobei die Innenrohr-Verklemmung eine Abdichtung, beispielsweise aus einer festen Scheibe (7) mit daran anschliessender Gummischeibe (8), zum Anlegen an den offenen planen Abschluss (27) am Ende des offenen Leitungsrohres (25), sowie eine sich ab der Scheibe (7) nach innen in das Leitungsrohr (25) sich erstreckende mechanische Klemm-Vorrichtung, ab welcher mindestens zwei Klemmbacken (10-13) mechanisch, hydraulisch oder pneumatisch radial ausfahrbar und mit der Innenwand des Leitungsrohrs (25) verspannbar sind, und die Gummischeibe hernach dichtend auf das Leitungsrohrende (37) spannbar ist, umfasst.

Beansprucht wird auch eine Vorschubeinheit (38) zum Einbringen einer Rute in ein Leitungsrohr (2), sowie Verfahren zum Einbringen von Kabeln, Stangen und Schläuchen in ein Leitungsrohr (25) mittels Druckluft sowie mittels Vorschubeinheit (38).

## Beschreibung

Die vorliegende Erfindung betrifft eine Innenrohr-Verklemmung zum Einbringen eines Einbringelements in ein Leitungsrohr, wobei die Innenrohr-Verklemmung als mechanische Basis zur Aufnahme von Reaktionskräften dient, wenn mit einer an diese Innenrohr-Verklemmung angedockte Vorrichtung ein Einbringelement in ein Leitungsrohr eingebracht wird, eine Vorschubeinheit zum Einbringen eines Einbringelements in ein Leitungsrohr mittels der Innenrohr-Verklemmung, ein Verfahren zum pneumatischen Einbringen eines Einbringelements mit der Innenrohr-Verklemmung, sowie ein Verfahren zum mechanischen Einbringen eines Einbringelements mit der Innenrohr-Verklemmung und der Vorschubeinheit.

Bekannte Vorrichtungen schliessen ein Antriebs- und Laufrad ein, zum Einschieben eines Elektro- oder Glasfaserkabels in ein Leitungsrohr. Indessen kann das Antriebs- und Laufrad auch für andere ähnliche Zwecke eingesetzt werden und es kann hierzu auch anders dimensioniert sein. So können etwa Schläuche und Stangen oder gar flächige Materialien in ähnlicher Weise gefördert werden.

Die Verlegung von unterirdisch geführten Glasfaserkabeln ist naturgemäss äusserst aufwändig, wenn hierzu neue Gräben geöffnet werden müssen, um die Kabel zu verlegen. Besonders in dicht besiedelten Gebieten müssen dazu oftmals Verkehrsströme umgeleitet werden, wenn Strassen aufgerissen werden müssen, oder es werden Rohrrammen eingesetzt, um Leitungsrohre zu verlegen, ohne hierzu Gräben aufreissen zu müssen, um sie unterirdisch verlegen zu können. So oder so aber ist der Ausbau enorm zeitaufwändig und kostenintensiv. Die Zuführung von mit Stecker oder Buchsen versehenden Elektrokabeln, und namentlich die Zuführung von Glasfaserkabeln ab einer Hauptleitung in ein Gebäude werden mit speziellen Vorrichtungen zur elektro-mechanischen Förderung von Elektrokabeln und Glasfaserkabeln in Leitungsrohre eingeschoben.

Aus DE 10 2016 012 960 A1 ist eine solche Vorrichtung bekannt geworden. Es handelt sich um eine Vorrichtung zum elektro-mechanischen Fördern eines Elektro- oder Glasfaserkabels mit von Steckern, Buchsen oder Kupplungsstücken belegten Enden in ein Leitungsrohr, bestehend aus zwei voneinander lösbaren und zueinander gerichtet zusammenpressbaren und dann aufeinander ablaufenden Stahl- oder Gummirädern, zwischen denen das Elektro- oder Glasfaserkabel verläuft, und deren Antriebsflächen elektromotorisch antreibbar sind. Das Kabel wird tangential zu den beiden Stahl- oder Gummirädern ausgerichtet zwischen die beiden aufeinander abrollenden Gummiräder zugeführt. Diese zwei Antriebs- und Laufräder funktionieren zwar hervorragend, sind aber in ihrer Herstellung aufwändig und teuer, indem die Gummi-Laufräder auf Stahlräder, die auf einer axialen Seite ein Zahnrad bilden, neben dem Zahnrad durch Vulkanisation aufgummiert werden müssen.

Eine Alternative für das Einziehen besteht darin, dass man ein Shuttle in das Rohr einbläst, das zunächst eine Schnur oder direkt ein Kabel oder eine Glasfaser hinter sich herzieht, ähnlich wie eine Rohrpost-Kapsel. Dieses Shuttle weist mindestens eine mit der Innenwand des Rohres abdichtende Scheibe auf, also zum Beispiel zwei runde Stahlscheiben, zwischen denen eine Gummischeibe etwas grösseren Durchmessers eingeklemmt ist, sodass eine flexible Lippe abdichtend an der Innenrohrwand anliegt. Axial zu dieser Dichtscheibe folgt ein Stab und dann mit einem gewissen Abstand von zum Beispiel 10 cm bis 20 cm eine zweite Scheibe, die als Führung dient. Das Shuttle hat dann gewissermassen die Form einer Gewichtheber-Stange mit scheibenförmigen Gewichten an ihren beiden Enden. Damit ein solches Shuttle eine grosse Zugkraft erreichen kann, wird es mit Druckluft in das Rohr gedrückt. Hierzu aber muss das Rohr hinter dem Shuttle abgedichtet werden, um die Reaktionskraft in Form des aufgebauten Druckes der Druckluft zu absorbieren. Hierfür wird nach dem Stand der Technik ein radial ausdehnbarer Gummi-Pfropfen hinter dem Shuttle in das Rohr hineingeschoben und durch Aufblasen oder mechanisches Aufblähen des Gummipfropfens wird dieser im Innern des Rohres mit dessen Innenwand verklemmt. Der Gummipfropfen sitzt dann im Rohr wie ein Zapfen in einer Champagnerflasche, wobei das Kabel oder die Glasfaser den Pfropfen in axialer Richtung durch ein Röhrchen annähernd dichtend geführt durchquert, wie auch eine Druckluftleitung. Diese Technologie mit Shuttle und Pfropfen leidet aber an zwei wesentlichen Schwachpunkten: Erstens versagt das Shuttle, wenn das Rohr auch nur schon an einer einzigen Stelle gequetscht oder sonstwie deformiert ist und nicht mehr einen genau kreisrunden Querschnitt aufweist. Das Shuttle bleibt an einer solchen Stelle stecken und kann sie nicht überwinden. Das Rohr kann auch einen nach unten gekrümmten Bogen beschreiben, in dem sich Wasser ansammelte, sodass das Rohr dort also einen Siphon bildet. Wenn dieser Siphon mit Wasser gefüllt ist, entstehen grosse Widerstände für das Shuttle. Das Wasser muss nach vorne hinausgestossen werden. Dazu werden grosse Drucke benötigt, bis zu 10 bar. Nun kommt der zweite Problemkreis: Bei hohen Drucken steigt die Gefahr, dass der Dichtpfropfen plötzlich dem Druck nicht mehr standhält und dann explosionsartig hinten aus dem Rohr hinauskatapultiert wird, wie der Korken einer Champagnerflasche. Das ist mitunter sehr gefährlich und sollte vermieden werden.

Die Aufgabe der vorliegenden Erfindung ist es deshalb, eine Verklemmung im Innern eines Leitungsrohrs zu erreichen, die äusserst grosse Rückstosskräfte absorbieren kann, und damit sicherstellt, dass sie als Basis für das mechanische Einschieben von Kabeln oder Glasfasern mit grosser Kraft ermöglicht, aber auch das Einpressen von Luft zum Schieben eines Shuttles ermöglicht, und dabei weit höhere Kräfte absorbieren kann als ein radial zum Beispiel mit Druckluft expandierter Gummipfropfen. Mit anderen Worten: Es soll eine kraftschlüssige Verklemmung, welche luftdicht abgedichtet werden kann, hergestellt werden können, während der Stand der Technik zwar eine formschlüssige, bei den angewandten Drücken jedoch oft nicht kraftschlüssige Verklemmung ermöglicht. Gedacht ist dabei an Leitungsrohre von bis zu ca. 200 mm Durchmesser.

Diese Aufgabe wird gelöst von einer Innenrohr-Verklemmung und Abdichtung eines Leitungsrohrs als Basis zum Einbringen eines Einbringelements in ein Leitungsrohr, wobei das Einbringelement in das Leitungsrohr unter Verwendung der Innenrohr-Verklemmung und Abdichtung entweder i) pneumatisch durch Ziehen mittels eines mit Druckluft beförderten Shuttles oder Fallschirms, oder ii) mechanisch durch Schieben eingebracht wird, um hernach mit dem Einbringelement das Einführen von beispielsweise Kabeln, Glasfasern oder Rohren mit Aussendurchmesser kleiner als der Innendurchmesser des Leitungsrohrs zu ermöglichen, dadurch gekennzeichnet, dass die Innenrohr-Verklemmung
- eine Abdichtung, beispielsweise aus einer festen Scheibe mit daran anschliessender Gummischeibe, zum Anlegen an den offenen planen Abschluss am Ende des offenen Leitungsrohres, sowie
- eine sich ab der Abdichtung, beispielsweise der Scheibe, nach innen in das Leitungsrohr erstreckende mechanische Klemm-Vorrichtung, ab welcher mindestens zwei Klemmbacken mechanisch, hydraulisch oder pneumatisch radial ausfahrbar und mit der Innenwand des Leitungsrohrs verspannbar sind, und die Gummischeibe hernach dichtend auf das Leitungsrohrende spannbar ist,
umfasst.

Beansprucht wird auch eine Vorschubeinheit nach Anspruch 11 zum Einbringen eines Einbringelements in ein Leitungsrohr mittels der erfindungsgemässen Innenrohr Verklemmung.

Zudem wird auch ein Verfahren zum pneumatischen Einbringen eines Einbringelements in ein Leitungsrohr mit der erfindungsgemässen Innenrohr-Verklemmung mittels Shuttle oder Fallschirm gemäss Anspruch 14 beansprucht.

Beansprucht wird auch ein Verfahren zum mechanischen Einbringen eines Einbringelements, beispielsweise eine Rute, in ein Leitungsrohr mittels Antrieb und der erfindungsgemässen Vorschubeinheit sowie der erfindungsgemässen Innenrohr-Verklemmung nach Anspruch 15.

Die Innenrohr-Verklemmung und Abdichtung, kurz Innenrohr-Verklemmung, die Vorschubeinheit, das Verfahren zum pneumatischen Einbringen eines Einbringelements in ein Leitungsrohr mittels Shuttle oder Fallschirm, sowie das Verfahren zum mechanischen Einbringen eines Einbringelements, beispielsweise einer Rute, mittels Antriebs in ein Leitungsrohr gemäss vorliegender Erfindung bieten überraschenderweise viele Vorteile.

So erlaubt die Innenrohr-Verklemmung eine einfache und reversible form- und kraftschlüssige Verbindung mit dem Leitungsrohr, sodass die Innenrohr-Verklemmung auch bei grösseren Drücken von beispielsweise bis zu 10 Bar fest mit dem Leitungsrohr verbunden bleibt, was in der Praxis ein äusserst wichtiger Vorteil darstellt. Denn herkömmliche Systeme wie radial ausdehnbare Dichtpfropfen bieten bei solch hohen Drücken keine kraftschlüssige Verbindung. Zudem ist insbesondere vorteilhaft - im Gegensatz zu herkömmlichen Vorrichtungen - dass die gleiche Innenrohr-Verklemmung mit einem Set von Klemmbacken mit unterschiedlicher Dicke, d.h. Abstand zur Längsachse der Innenrohr-Verklemmung, und unterschiedlichen äusseren Radien, Leitungsrohre mit stark unterschiedlichen Durchmessern eingesetzt werden kann. Dabei müssen in der Regel lediglich die Klemmbacken geändert werden. Somit kann die Innenrohr-Verklemmung beispielsweise bei Rohren mit einem Durchmesser von 30 cm bis 150 cm oder mehr eingesetzt werden, ohne dass beispielsweise die Scheibe zur Abdichtung der Innenrohr-Verklemmung zum Leitungsrohr geändert oder angepasst werden muss. Diese Vorteile zeigen sich auch im erfindungsgemässen Verfahren zum pneumatischen Einbringen eines Einbringelements in ein Leitungsrohr mit der Innenrohr-Verklemmung mittels Druckluft.

Beim pneumatischen Einsatz der Innenrohr-Verklemmung ist zudem äusserst vorteilhaft, dass das Einbringelement, beispielsweise in Form einer teuren Schnur aus Aramidfasern, typischerweise nach dem Einbringen problemlos wieder von der Innenrohr-Verklemmung entfernt werden kann, ohne dass das Einbringelement durchschnitten werden muss. Zudem ist es überraschenderweise möglich, dass, wenn der Shuttle oder der Fallschirm im Leitungsrohr steckenbleibt, diese mit dem Einbringelement zurückzuziehen. Dadurch muss bei einem solchen Ereignisfall nicht aufwendig die ganze Leitung freigelegt werden, um den Shuttle oder Fallschirm zu lokalisieren und zu entfernen.

Die erfindungsgemässe Vorschubeinheit sowie das erfindungsgemässe Verfahren zum mechanischen Einbringen eines Einbringelements, beispielsweise einer Rute, einem Dropkabel, einem dünnen Glasfaser-Kabel oder dergleichen, in ein Leitungsrohr mit der Vorschubeinheit und der Innenrohr-Verklemmung mittels Antriebs erlaubt auf einfache Art und Weise ein effizientes Fördern des Einbringelements, beispielsweise einer Rute, durch ein Leitungsrohr, wobei das Fördern ohne grosse und sperrige Geräte - beispielsweise lediglich mit einer Handbohrmaschine - durchgeführt werden kann. Dies ist nicht nur platzsparend, sondern erlaubt auch ein einfaches Einführen der Ruten in das Leitungsrohr an engen Stellen, beispielsweise in einem unterirdischen Schacht. Dabei wird unter Rute ein Glasfaserkabel mit einem Durchmesser von beispielsweise 0.5 bis 1.5 cm verstanden, wobei das Glasfaserkabel in der Regel nicht zur Datenübertragung geeignet ist.

### Die Innenrohr-Verklemmung und Abdichtung

Die erfindungsgemässe Innenrohr-Verklemmung und Abdichtung dient als Basis zum Einbringen eines Einbringelements in ein Leitungsrohr, wobei das Einbringelement in das Leitungsrohr unter Verwendung der Innenrohr-Verklemmung entweder i) pneumatisch durch Ziehen des Einbringelements mittels eines mit Druckluft beförderten Shuttles oder Fallschirms, oder ii) mechanisch durch Schieben eingebracht wird. Anschliessend können mit dem eingebrachten Einbringelement beispielsweise Kabel, Glasfasern oder kleinere Rohre, d.h. Rohre mit einem Aussendurchmesser, welcher kleiner als der Innendurchmesser des Leitungsrohrs ist, in das Leitungsrohr eingeführt werden. Dabei können auf einfache Art und Weise Kabel und Glasfasern auch über längere Leitungsrohre eingezogen werden, welche beispielsweise eine Länge von 200 Meter oder mehr aufweisen können. Die Leitungsrohre können aus Kunststoff wie Polyethylen (PE) oder Polypropylen (PP), Metall wie Stahl, Kupfer oder Aluminium oder dergleichen gefertigt und linear oder gekrümmt sein.

Unter Shuttle wird ein Element verstanden, welches bis auf wenige Millimeter den Durchmesser des jeweiligen Leitungsrohrs umfasst und beispielsweise aus Metall oder Kunststoff hergestellt ist. Unter Fallschirm wird ein Element verstanden, welches reversibel zusammenfaltbar ist und beispielsweise aus Gewebe oder flexiblem Kunststoff hergestellt ist. Zudem weist der Fallschirm, wenn plan ausgebreitet, einen grösseren Durchmesser als das Leitungsrohr auf. Der Shuttle wie auch der Fallschirm werden an das Ende des Einbringelements befestigt. Durch Applizieren von Druckluft - und somit pneumatisch - werden der Shuttle resp. der Fallschirm - durch das Leitungsrohr gejagt, wodurch der Shuttle resp. Fallschirm das Einbringelement durch das Ziehen in das Leitungsrohr einführen, d.h. einbringen. Dabei stösst der Shuttle jegliche Komponenten, welche sich im Rohr befinden, vor sich her und fördert diese aus dem Leitungsrohr. Der Fallschirm hingegen kann aufgrund seiner Flexibilität einfacher auch durch enge Leitungsrohrbiegungen und Rohrverjüngungen gefördert werden. Geeignete Einbringelemente sind dem Fachmann bekannt und umfassen eine Schnur, beispielsweise basierend auf Aramidfasern, ein Stahlseil, ein dünnes Rohr und dergleichen. Wird ein Rohr eingebracht, d.h. eingezogen, weist dieses einen Aussendurchmesser auf, welcher, typischerweise deutlich, kleiner ist als der Innendurchmesser des Leitungsrohrs, in welches das Rohr eingebracht wird.

Wird das Einbringelement in das Leitungsrohr unter Verwendung der Innenrohr-Verklemmung gemäss ii) mechanisch durch Schieben eingebracht, erfolgt dies bevorzugt mit der erfindungsgemässen Vorschubeinheit, welche typischerweise mit einem Antrieb, beispielsweise einer Handbohrmaschine, angetrieben wird. Alternativ kann auch die Vorrichtung gemäss DE 10 2016 012 960 A1 verwendet werden. Dabei ist das Einbringelement bei dieser Ausführungsform typischerweise eine Rute, ein Dropkabel, ein dünnes Glasfaser-Kabel oder dergleichen, welches zum Einschieben geeignet ist. Solche Einbringelemente sind dem Fachmann bekannt.

Die Innenrohr-Verklemmung umfasst eine Abdichtung, beispielsweise, und bevorzugt bestehend, aus einer festen Scheibe - beispielsweise aus Stahl - mit einer daran anschliessenden Gummischeibe, d.h. flächigen Gummidichtung, zum Anlegen an den offenen planen Abschluss am Ende des offenen Leitungsrohres, sowie eine sich ab der Abdichtung, beispielsweise der Scheibe, nach innen in das Leitungsrohr sich erstreckende mechanische Klemm-Vorrichtung, ab welcher mindestens zwei Klemmbacken mechanisch, hydraulisch oder pneumatisch radial ausfahrbar und mit der Innenwand des Leitungsrohrs verspannbar sind, und die Abdichtung, beispielsweise die Gummischeibe, hernach dichtend auf das Leitungsrohrende spannbar ist. Diese Ausführung führt zu einer luftdichten Innenrohr-Verklemmung, welche auch grossen Kräften standhalten kann, und trotzdem schnell, einfach und bei unterschiedlichsten Rohrdurchmessern installiert werden kann.

Die Klemm-Vorrichtung der erfindungsgemässen Innenrohr-Verklemmung und Abdichtung trägt vorteilhafterweise vier Klemmbacken, von denen je zwei einander gegenüberliegende Klemmbacken mechanisch, hydraulisch oder pneumatisch radial ausfahrbar sind.

Alternativ trägt die Klemm-Vorrichtung der Innenrohr-Verklemmung und Abdichtung drei, fünf oder sieben Klemmbacken, welche sternförmig angeordnet sind und die mechanisch, hydraulisch oder pneumatisch radial ausfahrbar sind.

In einer anderen Ausführungsform trägt die Klemm-Vorrichtung sechs oder acht Klemmbacken, die einander paarweise gegenüberfliegend angeordnet sind und mechanisch, hydraulisch oder pneumatisch radial ausfahrbar sind.

Indem die Klemmbacken radial ausfahrbar sind, wird die grösstmögliche Oberfläche der Klemmbacken an die Innenwand des Leitungsrohrs gepresst, was zu einer optimalen Verklemmung der Klemmbacken führt. Und die unterschiedliche Anzahl Klemmbacken erlaubt die Optimierung der Klemm-Vorrichtung auf den Durchmesser des Leitungsrohrs mit dem Ziel, einen möglichst grossen Teil des Umfangs des Leitungsrohrs zu bedecken, um die reversible Befestigung der Innenrohr-Verklemmung im Leitungsrohr zu optimieren.

Die Klemm-Vorrichtung weist bevorzugt einen in Längsrichtung geteilten Grundkörper auf, wobei die beiden Teile auf den Führungsstäben geführt sind, und dieser Grundkörper mit seinen zwei Teilen die Führungsschienen trägt, die mit je drei Schwenkarmen an den beiden Teilen angelenkt sind, sodass die Führungsschienen stets parallel zum Grundkörper verlaufen, und wobei die Führungsschienen mit ihren Klemmbacken radial nach aussen verfahrbar sind, indem mit der Gewindestange das hintere Teil des Grundköpers gegen das vordere Teil ziehbar ist, welches an der Gummischeibe ansteht, sodass die Führungsschienen mit ihren Klemmbacken nach aussen ausfahren und die Klemmbacken an der Innenwand des Leitungsrohres anschlagen und die Klemmvorrichtung daran verspannen. Diese Anordnung erlaubt die einfache Befestigung der Klemmbacken des Grundkörpers - und somit der Innenrohr-Verklemmung und Abdichtung - an der Innenseite des Leitungsrohrs. Denn durch Betätigen des Gewinderohrs, welches ein- oder zweiteilig sein kann, werden die beiden Teile des Grundkörpers zueinander hin- oder voneinander wegbewegt, wodurch sich die Schwenkarme für die Führungsschienen, und somit auch die Klemmbacken, bewegen. Wird nun das Gewinderohr an den Grundkörper geschraubt, bewegen sich die Klemmbacken parallel zur Längsrichtung hin zur Innenwand des Leitungsrohrs, wodurch die Innenrohr-Verklemmung reversibel daran befestigt wird.

Die Führungsschienen sind bevorzugt beidseits an je einem Schwenkarm sowie mit einem mittigen Schwenkarm am Grundkörper gelagert und verlaufen damit stets parallel zum Grundkörper, und die Führungsschienen sind mittels von aussen Ziehen eines mechanischen Gewindestabes radial nach aussen bewegbar und in ihrer Lage verspannbar, indem der Gewindestab in einem Keilelement mit Innengewinde steckt, und dieses Keilelement einen kreuzförmigen Querschnitt aufweist und die Schenkel des Kreuzes aussen je eine zur Scheibe hin abfallende Fläche aufweisen und somit Keile formen, sodass diese Keilflächen je ein Gegenstück unten an jeder Führungsschiene unterlaufen und die Führungsschienen mit ihren Klemmbacken am Grundkörper gegen aussen hin drückbar sind und mit der Innenwand des Leitungsrohrs verspannbar sind. Diese Anordnung erlaubt ein besonders vorteilhaftes Aus- und Einfahren der Klemmbacken zur Befestigung der Innenrohr-Verklemmung.

Die Klemm-Vorrichtung weist bevorzugt einen Grundkörper und eine Mechanik auf, bestehend aus einer Trägerschiene für jede Klemmbacke, wobei diese Trägerschiene beidseits an je drei Schwenkarmen am Grundkörper gelagert ist, und wobei die Trägerschienen mittels einer pneumatischen oder hydraulischen Kolbenzylindereinheit radial nach aussen bewegbar und in ihrer Lage verspannbar sind. Dadurch wird eine stabile Konstruktion erhalten, mit welcher die Innenrohr-Verklemmung die notwendigen Kräfte auf die Innenwand des Leitungsrohrs ausüben kann, um eine genügend hohe Stabilität zu erzielen.

Die Klemmbacken formen vorteilhafterweise an ihrer radialen Aussenseite scharfkantige quer zur Leitungsrohrachse verlaufende Stege als Widerhaken aus. Dabei sind die Widerhaken typischerweise an der Aussenseite der Klemmbacken ausgebildet, wodurch sie sich bei der Befestigung in der Innenwand des Leitungsrohrs verhaken. Dadurch wird die Innenrohr-Verklemmung noch besser im Leitungsrohr verankert.

Die Klemmbacken sind bevorzugt aus Aluminium gefertigt und weisen auf ihrer Unterseite nach innen offen Nuten auf, längs welchen sie auf Führungsschienen am Grundkörper der Klemm-Vorrichtung aufschiebbar sind, und in ihrer Endposition mittels je einer federbelasteten Kugel oben an der Führungsschiene, die in eine formgleiche Ausnehmung an der Unterseite der Klemmbacken einrasten, gesichert sind. Dies erlaubt ein schnelles und einfaches Austauschen der Klemmbacken, beispielsweise um solche für einen anderen Leitungsrohrdurchmesser zu befestigen.

Bevorzugt durchsetzen mindestens zwei Stäbe den Grundkörper der Klemm-Vorrichtung, sowie die Scheibe und die Gummischeibe in axialer Leitungsrohrrichtung und somit als Führung und Halterung für den Grundkörper im Leitungsrohr dienen, wobei eine zentraler Gewindestange in den Grundkörper eindringt sowie die Scheibe und die Gummischeibe durchdringt und mit Drehen der Gewindestange die Klemmbacken radial an die Innenwand des Leitungsrohrs ausfahrbar und an ihr verspannbar sind, und ein Gewinderohr über der Gewindestange drehbar ist, zum Verspannen der Scheibe gegen den verkrallten Grundkörper hin, für das Pressen der Gummischeibe auf das Leitungsrohrende und somit Abdichten des Leitungsrohres. Dadurch kann die Gummischeibe mit der Scheibe jeden Rohrdurchmesser abdichten, welcher nicht grösser ist als derjenige der Gummischeibe. Dies führt zu einer einfachen Handhabung mit grosser Flexibilität. Auch erlaubt diese Anordnung eine einfache und schnelle Befestigung der Innenrohr-Verklemmung im Inneren des Leitungsrohrs.

### Die Vorschubeinheit

Die erfindungsgemässe Vorschubeinheit ist besonders geeignet zum Einbringen, insbesondere Einschieben, eines Einbringelements, beispielsweise einer Rute, in ein Leitungsrohr mittels der erfindungsgemässen Innenrohr-Verklemmung. Unter Rute wird ein nur wenig biegbares Kabel verstanden, welches typischerweise aus Glasfaser besteht. Geeignete Ruten sind dem Fachmann bekannt.

Die Vorschubeinheit umfasst eine erste Führungseinheit, eine dazu im Wesentlichen symmetrische zweite Führungseinheit und mindestens eine Halterungseinheit zur Fixierung der beiden Führungseinheiten, wobei die erste und zweite Führungseinheit je mindestens eine Rolle mit Führungsrille, mindestens eine erste Antriebswelle, mindestens ein Zahnrad zum Übertragen von Kräften von der Antriebswelle der ersten Führungseinheit auf die Antriebswelle der zweiten Führungseinheit, und ein Getriebe zum Übertragen der Kräfte der Antriebswellen zu den Rollen der Führungseinheiten umfassen, wobei mindestens die Antriebswelle der ersten Führungseinheit ein Fixierelement zum Betätigen der ersten Antriebswelle aufweist.

Die Halterungseinheit der Vorschubeinheit ist bevorzugt mehrteilig, insbesondere zweiteilig, umfassend eine Halterungseinheit mit Verbindungselement und eine Spanneinheit zur Fixierung der Führungselemente, wenn deren Rollen einander gegenüberliegen und deren Zahnräder ineinandergreifen, wobei die Halterungseinheit und die Spanneinheit bevorzugt an den einander gegenüberliegenden Stirnseiten der Führungseinheiten angebracht sind. Dadurch können die Führungselemente optimal miteinander verbunden werden.

Die Halterungseinheit der Vorschubeinheit, und falls diese mehrteilig ist, typischerweise die Halterungseinheit mit Verbindungselement, umfasst bevorzugt ein Verbindungselement, beispielsweise in Form eines Bajonettverschlusses, zur Verbindung der Vorschubeinheit mit der Innenrohr-Verklemmung, insbesondere mit der Gewindestange der Innenrohr-Verklemmung. Dabei ist die Grösse und Form des Verbindungselements auf dasjenige der Innenrohr-Verklemmung angepasst, sodass die Vorschubeinheit kraftschlüssig mit der Innenrohr-Verklemmung verbunden werden kann. Zudem weisen die Verbindungselemente der Vorschubeinheit und der Innenrohr-Verklemmung eine Öffnung auf, durch welche die Rute - von den beiden Rollen der Vorschubeinheit angetrieben - mittig durch die Innenrohr-Verklemmung geführt werden kann.

### Die Verfahren

Das Verfahren zum pneumatischen Einbringen, und somit mittels Druckluft, eines Einbringelements in ein Leitungsrohr mit der erfindungsgemässen Innenrohr-Verklemmung mittels Shuttle oder Fallschirm erlaubt den einfachen Transport eines Einbringelements, insbesondere einer Schnur, einem Stahlseil, einem dünnen Rohr und dergleichen in und durch ein Leitungsrohr zum nachfolgenden Einführen, d.h. Einziehen mittels eingeführtem Einbringelement, beispielsweise eines Kabels, einer Glasfaser oder eines Rohrs. Dabei zieht der mittels Druckluft beförderte Shuttle oder Fallschirm auf einfache Art und Weise das Einbringelement durch das Leitungsrohr.

Das Verfahren umfasst folgende Schritte, wobei die Reihenfolge der Schritte auch anders sein kann:
- Befestigen des Shuttles oder Fallschirms an das zum Leitungsrohr zugewandten Ende des Einbringelements,
- Einfügen des Shuttles oder Fallschirms mit Einbringelement und des Grundkörpers der Innenrohr-Verklemmung mit den daran befestigten Klemmbacken in das Leitungsrohr, wobei das am Shuttle oder Fallschirm befestigte Einbringelement entlang des Grundkörpers, d.h. neben dem Grundkörper, angeordnet wird, sodass der Shuttle oder Fallschirm vor, d.h. in Richtung des Leitungsrohrs, den Grundkörper der Innenrohr-Verklemmung im Inneren des Leitungsrohrs zu liegen kommt,
- Einführen eines Einbringelements durch den Schlitz in die Seilführung der Scheibe,
- Verbinden der Gewindestange mit dem Grundkörper der Innenrohr-Verklemmung, formschlüssiges Anbringen der Abdichtung, beispielsweise der festen Scheibe mit Gummischeibe, an die Öffnung des Leitungsrohrs mit nachfolgendem Verklemmen der Klemmbacken des Grundkörpers, und somit der Innenrohr-Verklemmung, mit der Innenwand des Leitungsrohrs, wodurch die Innenrohr-Verklemmung kraftschlüssig mit dem Leitungsrohr verbunden wird. Dies erfolgt typischerweise mittels Eindrehen der Gewindestange in Richtung Grundkörper der Innenrohr-Verklemmung,
- Verbinden der Innenrohr-Verklemmung mit einer Druckluftquelle, und Betätigen, d.h. Öffnen, derselben. Dabei strömt die Druckluft in Längsrichtung durch die Gewindestange und den Grundkörper in das Leitungsrohr. Dabei kann der Druck bis zu 10 bar oder mehr betragen.

Dabei werden bevorzugt und typischerweise vor dem Einführen des Grundkörpers in das Leitungsrohr die für das jeweilige Leitungsrohr optimal geeigneten Klemmbacken am Grundkörper befestigt.

Dieses Verfahren ist einfach, schnell, effizient und kann bei unterschiedlichen Leitungsrohrdurchmessern problemlos mit der gleichen Innenrohr-Verklemmung und ohne spezifische Anpassung an das jeweilige Rohr durchgeführt werden.

Das Verfahren zum Einbringen eines Einbringelements, beispielsweise in Form einer Rute, in ein Leitungsrohr mittels Antrieb und der erfindungsgemässen Vorschubeinheit sowie der erfindungsgemässen Innenrohr-Verklemmung, eignet sich dort, wo das oben beschriebenen Verfahren mittels Schnur und Shuttle resp. Fallschirm ungeeignet ist. Dabei wird die Rute - im Gegensatz zur pneumatischen Förderung - mit der Vorschubeinheit in das Leitungsrohr geschoben.

Das Verfahren zum mechanischen Einbringen eines Einbringelements umfasst folgende Schritte, wobei die Reihenfolge der Schritte auch anders sein kann:
- Einführen des Grundkörpers mit den daran befestigten Klemmbacken in das Leitungsrohr, und verbinden der Gewindestange mit dem Grundkörper der Innenrohr-Verklemmung,
- Formschlüssiges Anbringen der Abdichtung, beispielsweise der festen Scheibe mit Gummischeibe, an die Öffnung des Leitungsrohrs mit nachfolgendem Verklemmen der Verklemmen der Klemmbacken des Grundkörpers, und somit der Innenrohr-Verklemmung, mit der Innenwand des Leitungsrohrs, wodurch die Innenrohr-Verklemmung kraftschlüssig mit dem Leitungsrohr verbunden wird, wobei dies typischerweise mittels Eindrehen der Gewindestange in Richtung Grundkörper der Innenrohr-Verklemmung erfolgt,
- Einführen der Rute in die Vorschubeinheit und durch die Gewindestange und den Grundkörper der Innenrohr-Verklemmung in das Leitungsrohr, wobei die Vorschubeinheit vor- oder nach dem Einführen der Rute mit der Innenrohr-Verklemmung verbunden wird,
- Anschliessen eines Antriebs, beispielsweise einer Handbohrmaschine, an das Fixierelement und Betätigen des Antriebs zum Fördern der Rute durch das Leitungsrohr.

Dabei können bevorzugt und typischerweise vor dem Einführen des Grundkörpers in das Leitungsrohr die für das jeweilige Leitungsrohr optimal geeigneten Klemmbacken am Grundkörper befestigt werden.

Dieses Verfahren ist einfach, schnell, effizient und kann bei unterschiedlichen Leitungsrohrdurchmessern problemlos mit der gleichen Innenrohr-Verklemmung und ohne spezifische Anpassung an das jeweilige Rohr durchgeführt werden. Zudem kann die Vorschubeinheit - im Gegensatz zu herkömmlichen Verfahren mit sehr grossen und sperrigen Vorschub-Vorrichtungen - bequem von Hand transportiert werden und auch bei engen Räumen, beispielsweise in einem unterirdischen Leitungskanal, angewendet werden.

Anhand der Zeichnungen wird zunächst ein Dichtpfropfen nach dem Stand der Technik gezeigt und hernach wird anhand mehrerer Abbildungen beispielhaft eine bevorzugte Ausführungsform der Innenrohr-Verklemmung gezeigt, welche gemäss der vorliegenden Erfindung dargestellt und beschrieben ist.

Es zeigt:
- Figur 1 :: einen herkömmlicher, radial ausdehnbaren Dichtpfropfen;
- Figur 2 :: Die Innenrohr-Verklemmung mit der Klemm-Vorrichtung, eingeschoben in ein, beispielsweise transparentes, Leitungsrohr;
- Figur 3 :: Die Innenrohr-Verklemmung mit entfernter Scheibe, das heisst mit der Klemm-Vorrichtung separat dargestellt, ausserhalb des Leitungsrohres;
- Figur 4 :: Die Innenrohr-Verklemmung mit Gummischeibe und mit ihrer Klemm-Vorrichtung und ihren vier Klemmbacken;
- Figur 5 :: Die Klemm-Vorrichtung und ihre Klemmbacken, wovon eine der Klemmbacken entfernt ist und lose neben der Klemm-Vorrichtung liegt;
- Figur 6 :: Die Klemm-Vorrichtung und ihre vier Klemmbacken entfernt und lose neben der Mechanik der Klemm-Vorrichtung liegend, mit den Führungsschienen in eingefahrener Ausgangslage;
- Figur 7 :: Die Mechanik der Klemm-Vorrichtung ohne die aufzusetzenden Klemmbacken, mit radial ausgefahrenen Führungsschienen;
- Figur 8 :: Die Mechanik der Klemm-Vorrichtung mit einer ersten Klemmbacke beim Aufsetzen durch Aufschieben;
- Figur 9 :: Die Innenrohr-Verklemmung eingeschoben in ein, beispielsweise transparentes, Leitungsrohr, mit der Gummischeibe noch nicht satt am Leitungsrohrende anliegend.
- Figur 10 :: Die einzelnen Teile der Vorschubeinheit mit Blick auf die Rollen, die jeweiligen Antriebswellen und Zahnräder der ersten und zweiten Führungseinheiten.
- Figur 11 :: Die zusammengebaute Vorschubeinheit aus perspektivischer Sicht.
- Figur 12 :: Die zusammengebaute Vorschubeinheit mit der ersten und zweiten Führungseinheit mit den seitlichen Abdeckungen, hinter welchen die Getriebe angeordnet sind. Zudem sind die Fixierelemente ersichtlich, an welche ein Antrieb angeordnet werden kann.
- Figur 13 :: Die Vorschubeinheit aufgeklappt, wobei die Spanneinheit nicht befestigt ist.
- Figur 14 :: Das Getriebe der Führungseinheiten mit Zahnrad und Fixierelement.

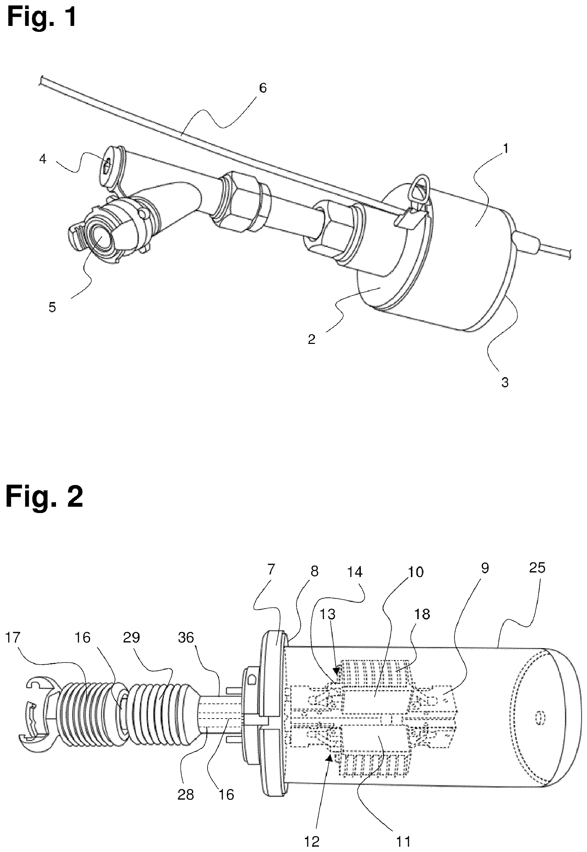

Die Figur 1 zeigt zunächst einen herkömmlichen, radial ausdehnbaren Dichtpfropfen 1. Das Ausdehnen kann erfolgen, indem hier Druckluft in das Innere des Gummibalges 1 gepresst wird, sodass er sich aufbläht. In einer Variante können die beiden endseitigen runden Stahl-Scheiben 2, 3 mechanisch gegeneinander hingezogen werden, was ebenfalls das radiale Ausdehnen des Balges 1 bewirkt. Damit verklemmt dieser Balg 1 an der Innenwand des hier nicht dargestellten Leitungsrohres, in welches er einpasst, und er bildet darin einen dichtenden Pfropfen 1. Durch eine axial verlaufendes Rohr 4 wird die Schnur oder das Kabel durch den Balg 1 hindurch zum Shuttle geführt, und durch die seitlich einmündende Abzweigung 5 kann Druckluft in das Innere des Leitungsrohres eingeblasen werde, zum vorwärts Treiben des ins Leitungsrohr eingeführten Shuttles, welches dann die Schnur oder das Kabel hinter sich nachzieht. Diese Schnur oder dieses Kabel kann auch durch das separate Röhrchen 6 geführt werden, das axial durch den Dichtpfropfen 1 und seine beiden endseitigen Scheiben 2, 3 geführt ist. Als Variante kann auch ein steifes Kabel oder eine Glasfaser durch dieses Röhrchen 6 ins Leitungsrohr eingeführt werden und das Kabel oder die Glasfaser kann durch eine herkömmliche mechanische Vorrichtung wie etwa aus DE 10 2016 012 960 A1 hervorgehend ins Leitungsrohr geschoben werden. Ein solcher Dichtpfropfen 1 wirkt wie ein Zapfen, der in einer Flasche steckt, und wenn sich hinter ihm im Leitungsrohr ein hinreichender Druck aufbaut, kann er wie ein Korken aus einer Champagnerflasche explosionsartig aus dem Leitungsrohr geschleudert werden, was für Personen im Mündungsbereich des Leitungsrohres sehr gefährlich sein kann und sie verletzen kann. Die erfindungsgemässe Innenrohr-Verklemmung soll diese Gefahr bannen und gleichzeitig noch höhere Arbeitsdrucke sowie auch das mechanische Einschieben von Kabeln und Glasfasern ermöglichen.

Die Figur 2 zeigt diese erfindungsgemässe Innenrohr-Verklemmung mit der Klemm-Vorrichtung eingeschoben in ein hier für die Darstellung transparentes Leitungsrohr 25, das den Blick auf die Klemm-Vorrichtung freigibt. Diese Innenrohr-Verklemmung schliesst eine kreisrunde Scheibe 7 ein, vorzugsweise eine Stahl- oder Aluminiumscheibe 7, an welche hier rechts daneben, gegen das Leitungsrohr 25 hin, eine kreisrunde Gummischeibe 8 anschliesst. Ein Gewinderohr 28 durchsetzt diese Scheibe 7 zentral und führt in den Grundkörper 9 der Innenrohr-Verklemmung. Dieser Grundkörper 9 trägt hier auf jeder seiner vier Seiten eine Klemmbacke 10-13. Diese Klemmbacken 10-13 sind auf je eine Führungsschiene 14 aufgeschoben. Die dem Blick abgewandten Schienen sind hier nicht sichtbar. Diese Führungsschienen 14 können radial aus dem Grundköper 9 ausgefahren werden, entweder mechanisch, hydraulisch oder pneumatisch betätigt. Die Klemmbacken 10-13 sind auf ihren radialen Aussenseiten mit scharfkantigen Stegen 18 versehen, die sich unter dem applizierten Auflage-Klemmdruck als Widerhaken in die Innenwand des Leitungsrohres 25 einpressen können. Damit wird nicht nur eine Verklemmung, sondern eine eigentliche Verkrallung erzielt, und es können ausserordentlich grosse Druckkräfte, die in der Figur 2 von rechts, das heisst vom Leitungsrohrinnern auf die Innenrohr-Verklemmung wirken, absorbiert werden. Diese Innenrohr-Verklemmung kann daher als Basis dafür dienen, um ab ihr ein steifes Kabel oder eine Glasfaser mit grosser Kraft in das Leitungsrohr hineinzustossen oder ab ihr ein Shuttle mittels Druckluft in das Leitungsrohr 25 hineinzutreiben. Auf der linken Seite der Figur 2 sind zwei Drehgriffe 17, 29 zu erkennen. Der äussere Drehgriff 17 dient zum radialen Ausfahren der Klemmbacken 10-13 mittels einer inneren Gewindestange 16, und der innere Drehgriff 29 zum Verspannen der Gummischeibe 8 mit dem Leitungsrohrende mittels eines äusseren Gewinderohrs 28, beide konzentrisch im Innern der Hülse 36 verlaufend, wie das noch erläutert wird.

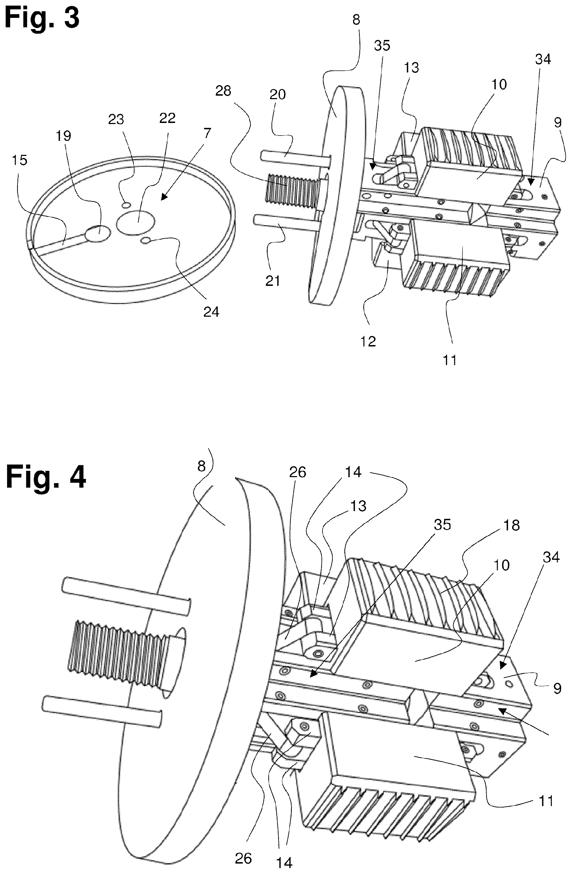

Die Figur 3 zeigt die Innenrohr-Verklemmung mit entfernter Scheibe 7, die hier lose links neben der Klemm-Vorrichtung liegt, die rechts separat dargestellt ist, ausserhalb des Leitungsrohres 25. Man sieht hier die Gummischeibe 8, die auf die zwei Führungsstäbe 20, 21 aufgesteckt ist, und auch über das zentrale Gewinderohr 28 gestülpt ist. In dieser Abbildung sieht man alle vier Klemmbacken 10-13 auf dem Grundkörper 9, der an den Führungsstäben 20, 21 geführt ist und längs derselben in zwei Teile 34, 35 unterteilt ist, die auf den Führungsstäben 20, 21 zueinander hin und her ein stückweit verschiebbar sind. An der demontierten Scheibe 7 erkennt man das zentrale Loch 22 zum Überstülpen der Scheibe 7 auf das zentrale Gewinderohr 28 sowie die beiden Bohrungen 23, 24, in welche die Führungsstäbe 20, 21 einpassen. Ausserdem erkennt man, dass diese Scheibe 7 einen radialen Schlitz 15 aufweist, an dessen innerem Ende die Seilführung 19 angeordnet ist. Dabei kann das Einbringelement bequem durch den Schlitz 15 in die Seilführung 19 eingeführt und entlang des Grundkörpers 34 der Innenrohr-Verklemmung und zwischen den Klemmbacken durchgeführt werden.

Die Figur 4 zeigt die Innenrohr-Verklemmung mit Gummischeibe 8 und mit ihrer Klemm-Vorrichtung und ihren vier Klemmbacken 10-13 auf dem Grundkörper 9 der Klemm-Vorrichtung. Auf der hier linken Seite der Klemmbacken 10-13 erkennt man je einen Schwenkarm 26, an dem eine Führungsschiene 14 am hinteren Teil 35 des Grundkörpers 9 angelenkt ist, genauso wie auf der gegenüberfliegenden, hier rechten Seite der Klemmbacken 10-13, wo ein ebensolcher Schwenkarm 27 am vorderen Teil 34 des Grundkörpers 9 angelenkt ist. Auf den radial äusseren Seiten der Klemmbacken 10-13 sind aus denselben scharfkantige Stege 18 ausgefräst.

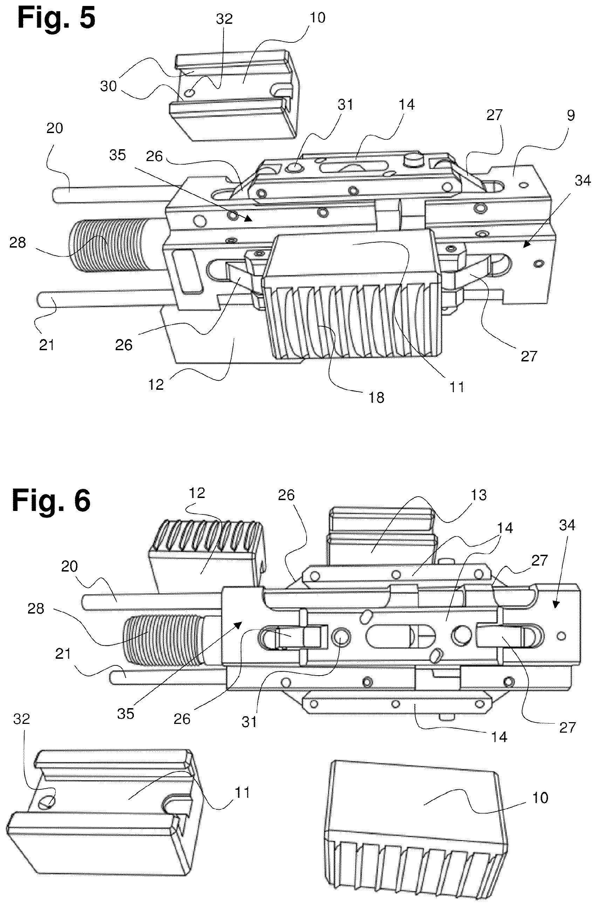

Die Figur 5 zeigt weitere Einzelheiten des Grundkörpers 9 der Klemm-Vorrichtung. Man sieht hier eine durch Wegnahme der zugehörigen Klemmbacke 10 freigelegte Führungsschiene 14, die an beiden Enden über je einen Schwenkarm 26, 27 am Grundkörper 9 angelenkt ist, sowie in der Mitte über einen weiteren, hier nicht sichtbaren mittigen Schwenkarm 33, der am hinteren, also hier im Bild linken Teil 35 des Grundkörpers 9 angelenkt ist. Damit ist sichergestellt, dass diese Führungsschienen 14 stets parallel zum Grundkörper 9 verlaufen. Die Klemmbacke 10 sieht man hier in ihrer gestürzten Lage, also auf ihre Unterseite gesehen. Es sind auf dieser Unterseite zwei gegenüberliegende Nuten 30 ausgefräst, die mit ihren Öffnungen gegeneinander hinzeigen. Mit diesen Nuten 30 lässt sich die Klemmbacke 10 in Längsrichtung auf die Führungsschiene 14 aufschieben.

Damit sie auf dieser Führungsschiene 14 vor einem ungewollten Verschieben gesichert ist, dient eine federbelastete Kugel 31 oben auf der Führungsschiene 14. Und in der Unterseite der Klemmbacke 10 ist eine zu dieser Kugel 31 passende Ausbuchtung 32 ausgenommen, in welche die Kugel 31 mit dem Aufschieben der Klemmbacke 10 einrastet. Sie ist damit auf dem Grundkörper 9 bzw. ihrer Führungsschiene 14 gesichert.

Die Figur 6 zeigt die Klemm-Vorrichtung mit ihren vier Klemmbacken 10-13 entfernt und lose neben der Mechanik bzw. neben dem Grundkörper 9 der Klemm-Vorrichtung liegend dargestellt. In der Unterseite der Klemmbacke 11 links unten im Bild erkennt man die Einbuchtung 32 für die federbelastete Kugel 31 oben auf der Führungsschiene 14. Ausserdem sind hier die Führungsstäbe 20, 21 einsehbar, welche den Grundkörper 9 der Klemm-Vorrichtung und seine zwei gegeneinander bewegbaren Teile 34, 35 durchsetzen. Im Innern des Grundkörpers 9 verbirgt sich eine hier nicht sichtbare Mechanik, mittels welcher die vier Führungsschienen 14 kollektiv radial nach aussen drückbar sind. Das kann zum Beispiel so bewerkstelligt sein, dass die Gewindestange 16, welche sich im Zentrum des grösseren Gewinderohrs 28 axial erstreckt, beim Drehen den vorderen Teil 34, also hier rechten Teil des in der Länge geteilten Grundkörpers 9 mittels einer Gewindeverbindung geführt längs der Führungsstäbe 20, 21 gegen sich zieht, während der hintere, hier linke Teil 35 des Grundkörpers 9 an der Gummischeibe 8 anschlägt. Die drei Schwenkarme 26, 27 und 33 werden dadurch aufgeschwenkt und nehmen eine steilere Lage ein, und die Führungsschienen 14 mit ihren Klemmbacken 10-13 werden an allen Seiten des Grundkörpers 9 gegen aussen gedrückt und die Klemmbacken 10-13 schliesslich mit der Innenwand des Leitungsrohrs 25 verspannt.

In einer alternativen Ausführung kann das radiale Auseinanderfahren der Klemmbacken 10-13 auch so realisiert sein, dass das Ziehen des mechanischen Gewindestabes 16 radial nach aussen im Innern des Grundkörpers 9 ein Keilelement in Richtung der Gummischeibe 8 verschiebt, während der Grundkörper 9 an der Gummischeibe 8 anschlägt. Dieses Keilelement kann zum Beispiel einen kreuzförmigen Querschnitt aufweisen und die Schenkel des Kreuzes formen aussen je eine zur Gummischeibe 8 hin abfallende Fläche und somit je einen Keil. Diese Keilflächen unterfahren dann je ein Gegenstück unten an jeder Führungsschiene 14 und die Führungsschienen 14 mit ihren Klemmbacken 10-13, geführt an den drei Schwenkarmen 26, 33, werden deshalb am Grundkörper 9 gegen aussen gedrückt und die auf ihnen sitzenden Klemmbacken 10-13 verspannen mit der Innenwand des Leitungsrohrs 25.

Weitere Ausführungen zum Ausfahren und Verspannen der Klemmbacken 10-13 können auch pneumatisch oder hydraulisch funktionieren, indem zum Beispiel das Keilelement im Innern des Grundkörpers 9 hydraulisch oder pneumatisch angetrieben verschoben wird, oder bei einem zweiteiligen Grundkörper 9 können die beiden Teile 34, 35 gegeneinander hydraulisch oder pneumatisch betätigt verfahrbar sein und umgekehrt, was in Zusammenwirkung mit den drei Schwenkarmen 26, 27 und 33 ebenfalls zum radial nach aussen Fahren der Klemmbacken 10-13 führt.

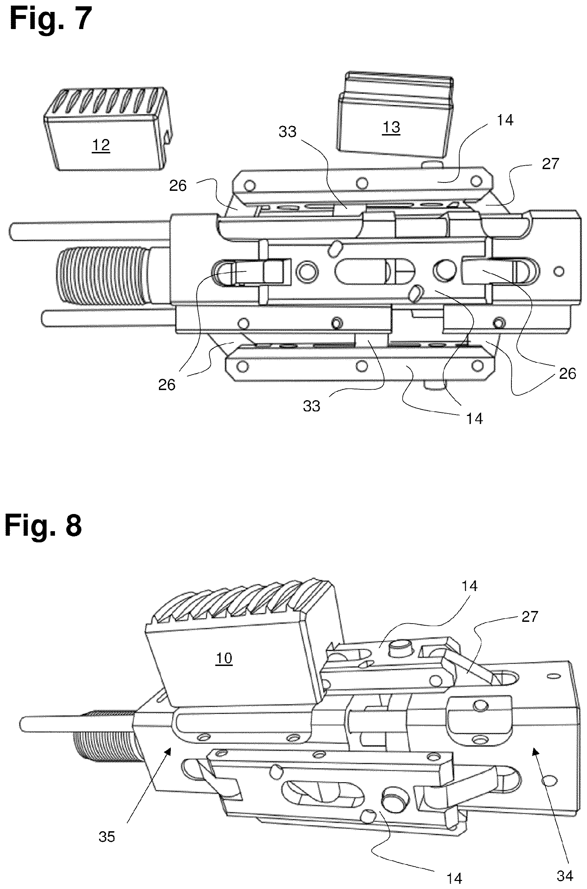

In der Figur 7 sind die mittigen Schwenkarme 33 deutlich zu erkennen. Alle drei Schwenkarme 26, 27 und 33 befinden sich in radial ausgefahrenem Zustand der Klemmbacken 10-13 in einer steileren Position zum Grundkörper 9 wie anfänglich bei eingefahrenen Führungsschienen 14 und Klemmbacken 10-13.

In Figur 8 ist die Situation gezeigt, in welcher die erste Klemmbacke 10 auf die Führungsschiene 14 am Grundkörper 9 der Klemm-Vorrichtung aufgeschoben wird. Weil diese Klemmbacken 10-13 aufschiebbar sind und daher leicht austauschbar sind, können Klemmbacken unterschiedlicher Höhe hergestellt werden und die Klemmvorrichtung eignet sich dann für verschiedenste Leitungsrohr-Innendurchmesser. An den Klemmbacken 10-13 wird vorzugsweise eingraviert, für welchen Innenrohr-Durchmesser eines Leitungsrohrs 25 sie sich eignen.

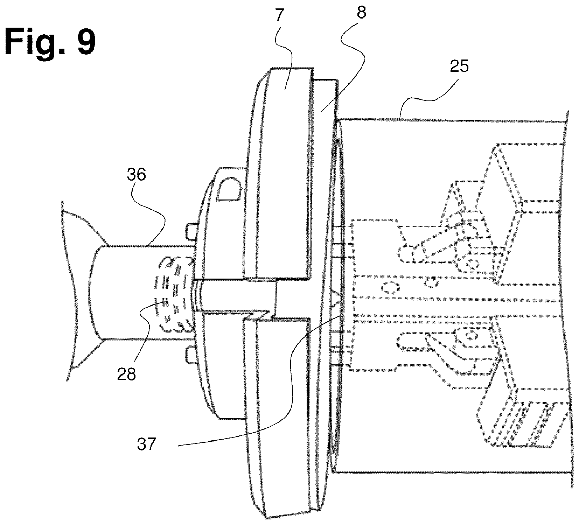

Die Figur 9 zeigt diese Innenrohr-Verklemmung mit ihrer Klemm-Vorrichtung hineingeschoben in ein, beispielsweise transparentes, Leitungsrohr 25. Hier erkennt man den planen Abschluss 37 des Leitungsrohrs 25, das es abzudichten gilt. Die Scheibe 7 und die Gummischeibe 8 sind in dieser Situation noch wenig beabstandet vom Leitungsrohrende 37. Aus dieser Situation heraus wird zunächst die Klemm-Vorrichtung betätigt, durch Drehen der Gewindestange 16 mit dem in Figur 2 ganz links sichtbaren Drehgriff 17. Diese Gewindestange 16 befindet sich im Innern des grösseren Gewinderohres 28. Durch diese Drehung der Gewindestange 16 im Innern des Gewinderohres 28, wovon beide in den Grundkörper 9 führen, wird der vordere Teil 34 des Grundkörpers 9 gegen den hinteren Teil 35 hingezogen, sodass die Führungsschienen 14 am Grundkörper 9 sich unter Aufschwenken der Schwenkarme 26, 27, 33 in radialer Richtung nach aussen bewegen, mitsamt den Klemmbacken 10-13, und diese verklemmen schliesslich mit der Innenwand des Leitungsrohrs 25.

Jetzt, wo die Klemm-Vorrichtung mit dem Leitungsrohr 25 fest verspannt ist und die Klemmbacken 10-13 sich an der Innenwand des Leitungsrohrs 25 festkrallten, wird das grössere Gewinderohr 28 mit dem Griff 29, sichtbar in Figur 2, gedreht. Eine Hülse 36 über diesem Gewinderohr 28 liegt aussen auf der Scheibe 7 auf und drückt sie mit der vor der Scheibe 7 liegenden Gummischeibe 8 auf das Leitungsrohrende 37 und die Reaktionskraft wirkt auf die verkrallte Klemm-Vorrichtung. Es lässt sich eine satte, dichtende Verspannung der Scheibe 7 und Gummischeibe 8 mit dem Leitungsrohrende 37 erzeugen. Jetzt kann diese Innenrohr-Verklemmung dazu dienen, ein vorher ins Leitungsrohr 25 eingeführtes Shuttle darin mit hohen Drucken ins Leitungsrohr 25 hineinzubefördern. Im Grenzfall, wenn die Verkrallung einem sehr hohen Druck nicht standhalten sollte, kann nichts Gefährliches passieren. Der Grundkörper 9 würde wenig im Leitungsrohr gegen aussen hin verrutschen und damit würde zwischen Leitungsrohrende 37 und Gummischeibe 8 ein Spalt entstehen und Luft würde dort sofort austreten und den Druck reduzieren.

Aber nicht nur zum Arbeiten mit hohen Drucken für das Befördern eines Shuttles oder Fallschirms kann diese Innenrohr-Verklemmung dienen, sondern ebenso für das mechanische Einleiten bzw. Hineinstossen eines steifen Kabels oder einer Glasfaser mittels einer mechanischen Vorrichtung, insbesondere der erfindungsgemässen Vorschubeinheit 38, oder wie in der DE 10 2016 012 960 A1 gezeigt. Die Innen-Verklemmung nimmt dann die Reaktionskräfte der Einschiebe-Vorrichtung auf. Mit dieser Art eines Einführens eines Kabels oder einer Glasfaser können auch Leitungsrohrquetschungen oder Siphons, gefüllt mit Wasser, ohne Weiteres überwunden werden.

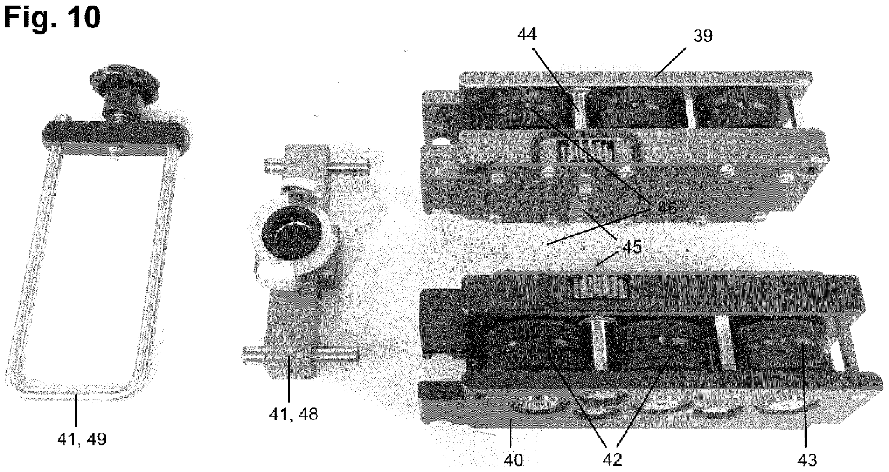

Die Figur 10 zeigt die einzelnen, separat angeordneten Teile der Vorschubeinheit 38 dar mit der ersten und zweiten Führungseinheit 39, 40, sowie der zweiteiligen Halterungseinheit 41 mit Verbindungselement 48 und Spanneinheit 49. Die Führungseinheiten 39, 40 zeigen beispielhaft je drei Rollen 42 mit Führungsrillen 43, sowie die Antriebswellen 44 mit den Fixierelementen 45 und den Zahnräder 46.

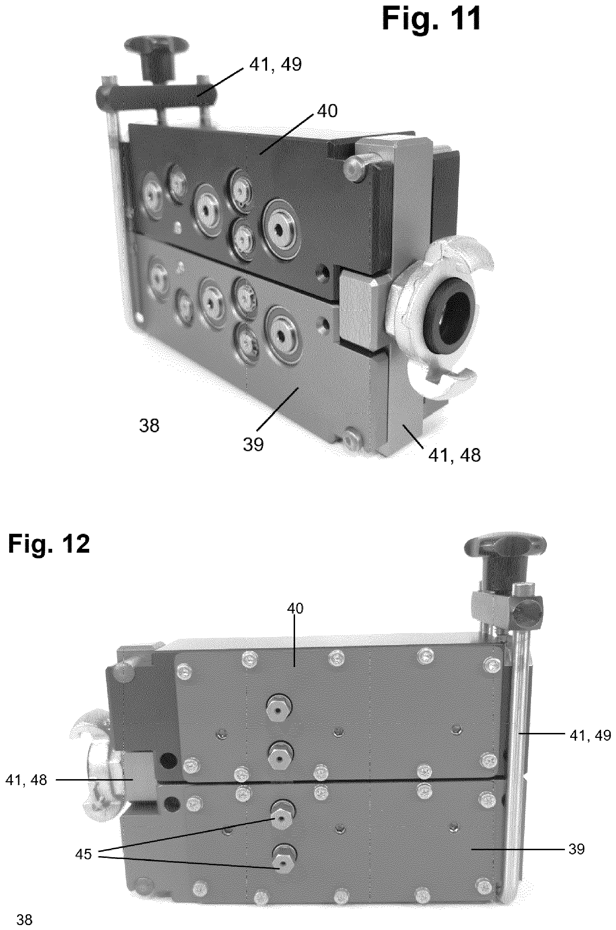

Die Figur 11 zeigt die zusammengebaute, erfindungsgemässe Vorschubeinheit 38 mit der ersten und zweiten Führungseinheit 39, 40, welche auf der - in Fig. 10 vorderen - Stirnseite mit der Halterungseinheit mit Verbindungselement 48 gehalten und auf der gegenüberliegenden Stirnseite durch die Spanneinheit 49 verspannt ist. Die Halterungseinheit mit Verbindungselement 48 und die Spanneinheit 49 bilden zusammen die Halterungseinheit 41, welche beispielhaft als zweiteilige Halterungseinheit 41 ausgebildet ist.

Das Verbindungselement, beispielhaft in Form eines Bajonettverschlusses, kann form- und kraftschlüssig mit der Gewindestange 16 der Innenrohr-Verklemmung verbunden werden.

Die Figur 12 zeigt die zusammengebaute Vorschubeinheit 38 mit der ersten und zweiten Führungseinheit 39, 40 mit seitlichen Abdeckungen, hinter welchen die Getriebe 47 angeordnet sind. Zudem sind die Fixierelemente 45 ersichtlich, an welche ein Antrieb angeordnet werden kann. Beide Führungseinheiten 39, 40 weisen beispielhaft je zwei Fixierelemente 45 auf, welche anhand der Getriebe die Rollen 42 schneller oder langsamer antreiben. Die beiden Führungseinheiten 39, 40 sind mit der zweiteiligen Halterungseinheit 41, der Halterungseinheit mit Verbindungselement 48 und der Spanneinheit 49, reversibel zusammen verbunden.

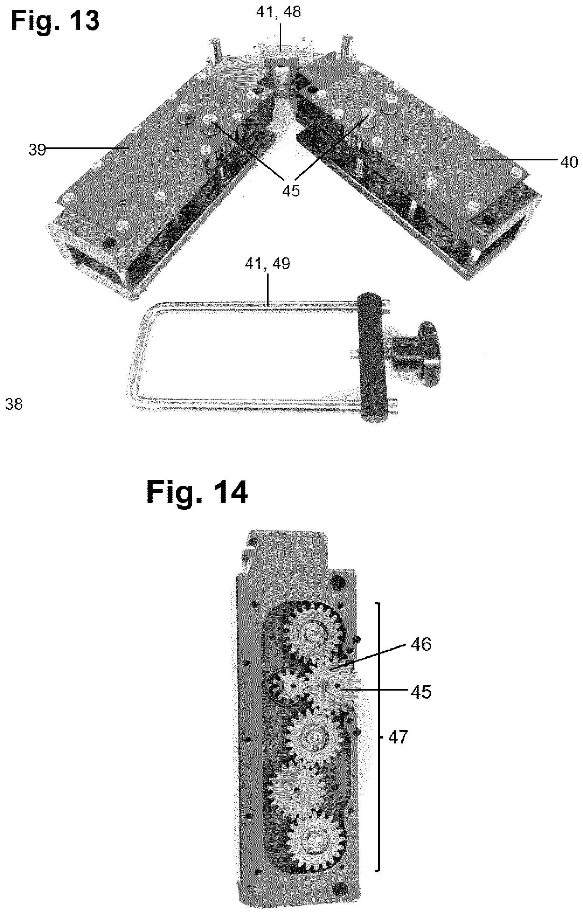

Die Figur 13 zeigt die Vorschubeinheit 38 mit entfernter Spanneinheit 49, wobei letztere nicht befestigt ist. Die beiden Führungseinheiten 39, 40 sind drehbar an der Halterungseinheit mit Verbindungselement 48 angeordnet, wodurch die Führungseinheiten 39, 40 um die beiden Stangen der Halterungseinheiten 48 bewegt werden können. Dies erlaubt eine einfache Montage der Vorschubeinheit 38 und ein teilweises Öffnen derselben.

Die Figur 14 zeigt beispielhaft das Getriebe 47 der Führungseinheiten 39, 40 mit Zahnrad 46, welches für die Kräfte von einer Führungseinheit zur anderen Führungseinheit überträgt. Zudem übertragen die Zahnräder 46 die Kräfte auf die drei Räder, um einen optimalen Vorschub der eingeführten Rute zu gewährleisten. Das Getriebe 47 weist zudem eine Untersetzung auf, damit die Geschwindigkeit, mit welcher die Rute angetrieben wird, geregelt werden kann.

### Ziffernverzeichnis

- 1: Balg, Dichtpfropfen
- 2: erste endseitige Scheibe am Balg
- 3: zweite endseitige Scheibe am Balg
- 4: axiale Bohrung
- 5: einmündende Abzweigung
- 6: Röhrchen
- 7: Scheibe
- 8: Gummischeibe
- 9: Grundkörper
- 10: Klemmbacke
- 11: Klemmbacke
- 12: Klemmbacke
- 13: Klemmbacke
- 14: Führungsschiene für Klemmbacke
- 15: radialer Schlitz in der Scheibe 7
- 16: Gewindestange im Gewinderohr 28
- 17: Drehgriff ganz links in Figur 2
- 18: scharfkantige Stege auf Klemmbacke
- 19: Seilführung
- 20: Führungsstab für Grundkörper 9
- 21: Führungsstab für Grundkörper 9
- 22: zentrales Loch in der Scheibe 7, für das Gewinderohr 28
- 23: Bohrung in Scheibe 7 für Führungsstab 20
- 24: Bohrung in Scheibe 7 für Führungsstab 21
- 25: Leitungsrohr
- 26: Schwenkarm für Führungsschiene 14 hinten
- 27: Schwenkarm für Führungsschiene 14 vorne
- 28: Gewinderohr durch Scheibe 7 und Grundkörper 9
- 29: Griff für Gewinderohr 28
- 30: Nuten auf Unterseite der Klemmbacken 10-13
- 31: federbelastete Kugel oben auf der Führungsschiene 14
- 32: Ausbuchtung für Kugel 31 an der Klemmbacken-Unterseite
- 33: mittige Schwenkarme für Führungsschienen
- 34: vorderer Teil des Grundkörpers 9
- 35: hinterer Teil des Grundkörpers 9
- 36: Hülse über dem Gewinderohr 38
- 37: planer Abschluss des Leitungsrohrs 25
- 38: Vorschubeinheit 38
- 39: erste Führungseinheit 39
- 40: zweite Führungseinheit 40
- 41: Halterungseinheit 41
- 42: Rolle 42
- 43: Führungsrille 43 der Rollen 42
- 44: erste Antriebswelle 44
- 45: Fixierelement 45
- 46: Zahnrad 46
- 47: Getriebe 47
- 48: Halterungseinheit mit Verbindungselement 48
- 49: Spanneinheit 49

## Patentansprüche

1. Innenrohr-Verklemmung und Abdichtung eines Leitungsrohrs (25) als Basis zum Einbringen eines Einbringelements in ein Leitungsrohr (25), wobei das Einbringelement in das Leitungsrohr (25) unter Verwendung der Innenrohr-Verklemmung und Abdichtung entweder i) pneumatisch durch Ziehen mittels eines mit Druckluft beförderten Shuttles oder Fallschirms, oder ii) mechanisch durch Schieben eingebracht wird, um hernach mit dem Einbringelement das Einführen von beispielsweise Kabeln, Glasfasern oder Rohren mit Aussendurchmesser kleiner als der Innendurchmesser des Leitungsrohrs (25) zu ermöglichen, **dadurch gekennzeichnet, dass** die Innenrohr-Verklemmung
- eine Abdichtung, beispielsweise aus einer festen Scheibe (7) mit daran anschliessender Gummischeibe (8), zum Anlegen an den offenen planen Abschluss (27) am Ende des offenen Leitungsrohres (25), sowie
- eine sich ab der Abdichtung, beispielsweise der Scheibe (7), nach innen in das Leitungsrohr (25) sich erstreckende mechanische Klemm-Vorrichtung, ab welcher mindestens zwei Klemmbacken (10-13) mechanisch, hydraulisch oder pneumatisch radial ausfahrbar und mit der Innenwand des Leitungsrohrs (25) verspannbar sind, und die Gummischeibe hernach dichtend auf das Leitungsrohrende (37) spannbar ist,
umfasst.

2. Innenrohr-Verklemmung und Abdichtung nach Anspruch 1, **dadurch gekennzeichnet, dass** die Klemm-Vorrichtung vier Klemmbacken (10-13) trägt, von denen je zwei einander gegenüberliegende Klemmbacken (10-13) mechanisch, hydraulisch oder pneumatisch radial ausfahrbar sind.

3. Innenrohr-Verklemmung und Abdichtung nach Anspruch 1, **dadurch gekennzeichnet, dass** die Klemm-Vorrichtung drei, fünf oder sieben Klemmbacken sternförmig angeordnet trägt, die mechanisch, hydraulisch oder pneumatisch radial ausfahrbar sind.

4. Innenrohr-Verklemmung und Abdichtung nach Anspruch 1, **dadurch gekennzeichnet, dass** die Klemm-Vorrichtung sechs oder acht Klemmbacken trägt, die einander paarweise gegenüberfliegend angeordnet sind und mechanisch, hydraulisch oder pneumatisch radial ausfahrbar sind.

5. Innenrohr-Verklemmung und Abdichtung nach Anspruch 1 oder 2, **dadurch gekennzeichnet, dass** die Klemm-Vorrichtung einen in Längsrichtung geteilten Grundkörper (9) aufweist, und die beiden Teile (34, 35) auf den Führungsstäben (20, 21) geführt sind, und dieser Grundkörper (9) mit seinen zwei Teilen (34, 35) die Führungsschienen (14) trägt, die mit je drei Schwenkarmen (26, 27, 33) an den beiden Teilen (34, 35) angelenkt sind, sodass die Führungsschienen (14) stets parallel zum Grundkörper (9) verlaufen, und wobei die Führungsschienen (14) mit ihren Klemmbacken (10-13) radial nach aussen verfahrbar sind, indem mit der Gewindestange (16) das hintere Teil (34) des Grundköpers (9) gegen das vordere Teil (35) ziehbar ist, welches an der Gummischeibe (8) ansteht, sodass die Führungsschienen (14) mit ihren Klemmbacken (10-13) nach aussen ausfahren und die Klemmbacken (10-13) an der Innenwand des Leitungsrohres (25) anschlagen und die Klemmvorrichtung daran verspannen.

6. Innenrohr-Verklemmung und Abdichtung nach Anspruch 1 oder 2, **dadurch gekennzeichnet, dass** die Führungsschienen (14) beidseits an je einem Schwenkarm (26, 27) sowie mit einem mittigen Schwenkarm (33) am Grundkörper (9) gelagert sind und damit stets parallel zum Grundkörper (9) verlaufen, und die Führungsschienen (14) mittels von aussen Ziehen eines mechanischen Gewindestabes (16) radial nach aussen bewegbar und in ihrer Lage verspannbar sind, indem der Gewindestab (16) in einem Keilelement mit Innengewinde steckt, und dieses Keilelement einen kreuzförmigen Querschnitt aufweist und die Schenkel des Kreuzes aussen je eine zur Scheibe (7) hin abfallende Fläche aufweisen und somit Keile formen, sodass diese Keilflächen je ein Gegenstück unten an jeder Führungsschiene (14) unterlaufen und die Führungsschienen (14) mit ihren Klemmbacken (10-13) am Grundkörper (9) gegen aussen hin drückbar sind und mit der Innenwand des Leitungsrohrs (25) verspannbar sind.

7. Innenrohr-Verklemmung und Abdichtung nach Anspruch 1 oder 3, **dadurch gekennzeichnet, dass** die Klemm-Vorrichtung einen Grundkörper (9) und eine Mechanik aufweist, bestehend aus einer Trägerschiene (14) für jede Klemmbacke (10-13), wobei diese Trägerschiene (14) beidseits an je drei Schwenkarmen (26, 27, 33) am Grundkörper (9) gelagert ist, und wobei die Trägerschienen (14) mittels einer pneumatischen oder hydraulischen Kolbenzylindereinheit radial nach aussen bewegbar und in ihrer Lage verspannbar sind.

8. Innenrohr-Verklemmung und Abdichtung nach einem der vorangehenden Ansprüche, **dadurch gekennzeichnet, dass** die Klemmbacken (10-13) an ihrer radialen Aussenseite scharfkantige quer zur Leitungsrohrachse verlaufende Stege (18) als Widerhaken ausformen.

9. Innenrohr-Verklemmung und Abdichtung nach einem der vorangehenden Ansprüche, **dadurch gekennzeichnet, dass** die Klemmbacken (10-13) aus Aluminium gefertigt sind und auf ihrer Unterseite nach innen offen Nuten (30) aufweisen, längs welchen sie auf Führungsschienen (14) am Grundkörper (9) der Klemm-Vorrichtung aufschiebbar sind, und in ihrer Endposition mittels je einer federbelasteten Kugel (31) oben an der Führungsschiene (14), die in eine formgleiche Ausnehmung (32) an der Unterseite der Klemmbacken (10-13) einrasten, gesichert sind.

10. Innenrohr-Verklemmung und Abdichtung nach einem der vorangehenden Ansprüche, **dadurch gekennzeichnet, dass** mindestens zwei Stäbe (20, 21) den Grundkörper (9) der Klemm-Vorrichtung, sowie die Scheibe (7) und die Gummischeibe (8) in axialer Leitungsrohrrichtung durchsetzen und somit als Führung und Halterung für den Grundkörper (9) im Leitungsrohr (25) dienen, und eine zentraler Gewindestange (16) in den Grundkörper (9) eindringt sowie die Scheibe (7) und die Gummischeibe (8) durchdringt und mit Drehen der Gewindestange (16) die Klemmbacken (10-13) radial an die Innenwand des Leitungsrohrs (25) ausfahrbar und an ihr verspannbar sind, und ein Gewinderohr (28) über der Gewindestange (16) drehbar ist, zum Verspannen der Scheibe (7) gegen den verkrallten Grundkörper (9) hin, für das Pressen der Gummischeibe (8) auf das Leitungsrohrende und somit Abdichten des Leitungsrohres (25).

11. Vorschubeinheit (38) zum Einbringen, insbesondere Einschieben, eines Einbringelements, insbesondere einer Rute, in ein Leitungsrohr (25) mittels der Innenrohr-Verklemmung nach einem der Ansprüche 1 bis 10, umfassend eine erste Führungseinheit (39), eine dazu symmetrische zweite Führungseinheit (40) und mindestens eine Halterungseinheit (41) zur Fixierung der beiden Führungseinheiten (39, 40), wobei die erste und zweite Führungseinheit (39, 40) je mindestens eine Rolle (42) mit Führungsrille (43), mindestens eine erste Antriebswelle (44), mindestens ein Zahnrad (46) zum Übertragen von Kräften von der Antriebswelle (44) der ersten Führungseinheit (39) auf die Antriebswelle (44) der zweiten Führungseinheit (40), und ein Getriebe (47) zum Übertragen der Kräfte der Antriebswellen (44) zu den Rollen (42) der Führungseinheiten (39, 40) umfassen, wobei mindestens die Antriebswelle (44) der ersten Führungseinheit (39) ein Fixierelement (45) zum Betätigen der ersten Antriebswelle (44) aufweist.

12. Vorschubeinheit (38) nach Anspruch 11, **dadurch gekennzeichnet, dass** die Halterungseinheit (41) mehrteilig, insbesondere zweiteilig, ist und eine Halterungseinheit mit Verbindungselement (48) und eine Spanneinheit (49) zur Fixierung der Führungselemente (39, 40), wenn deren Rollen (42) einander gegenüberliegen und deren Zahnräder (46) ineinandergreifen, umfasst, wobei die Halterungseinheit (48) und die Spanneinheit (49) bevorzugt an den einander gegenüberliegenden Stirnseiten der Führungseinheiten (39, 40) angebracht sind.

13. Vorschubeinheit (38) nach Anspruch 11, **dadurch gekennzeichnet, dass** die Halterungseinheit (48) ein Verbindungselement umfasst zur Verbindung der Vorschubeinheit (38) mit der Innenrohr-Verklemmung, insbesondere mit der Gewindestange (16) der Innenrohr-Verklemmung.

14. Verfahren zum pneumatischen Einbringen eines Einbringelements in ein Leitungsrohr (25) mit der Innenrohr-Verklemmung nach mindestens einem der Ansprüche 1 bis 10 mittels Shuttle oder Fallschirm, umfassend die Schritte:
- Befestigen des Shuttles oder Fallschirms an das zum Leitungsrohr (25) zugewandten Ende des Einbringelements, Einfügen des Shuttles oder Fallschirms mit Einbringelement und des Grundkörpers (9) der Innenrohr-Verklemmung mit den daran befestigten Klemmbacken (10-13) in das Leitungsrohr (25), wobei das am Shuttle oder Fallschirm befestigte Einbringelement entlang des Grundkörpers (9) angeordnet wird, sodass der Shuttle oder Fallschirm vor den Grundkörper (9) der Innenrohr-Verklemmung im Inneren des Leitungsrohrs (25) zu liegen kommt,
- Einführen des Einbringelements durch den Schlitz (15) in die Seilführung (19) der Scheibe (7),
- Verbinden der Gewindestange (16) mit dem Grundkörper (9) der Innenrohr-Verklemmung formschlüssiges Anbringen der Abdichtung an die Öffnung des Leitungsrohrs (25) mit nachfolgendem Verklemmen der Klemmbacken (10-13) des Grundkörpers (9) mit der Innenwand des Leitungsrohrs (25), wodurch die Innenrohr-Verklemmung kraftschlüssig mit dem Leitungsrohr (25) verbunden wird,
- Verbinden der Innenrohr-Verklemmung mit einer Druckluftquelle, und Betätigen derselben, wodurch die Druckluft in Längsrichtung durch die Gewindestange (16) und den Grundkörper (9) in das Leitungsrohr (25) strömt.

15. Verfahren zum mechanischen Einbringen eines Einbringelements, beispielsweise eine Rute, in ein Leitungsrohr (25) mittels Antrieb und der Innenrohr-Verklemmung nach mindestens einem der Ansprüche 1 bis 10 sowie der Vorschubeinheit (38) nach mindestens einem der Ansprüche 11 bis 13, umfassend die Schritte:
- Einführen des Grundkörpers (9) mit den daran befestigten Klemmbacken (10-13) in das Leitungsrohr, und verbinden der Gewindestange (16) mit dem Grundkörper (9) der Innenrohr-Verklemmung, Formschlüssiges Anbringen der Abdichtung an die Öffnung des Leitungsrohrs (25) mit nachfolgendem Verklemmen der Klemmbacken (10-13) des Grundkörpers (9), und somit der Innenrohr-Verklemmung, mit der Innenwand des Leitungsrohrs (25), wodurch die Innenrohr-Verklemmung kraftschlüssig mit dem Leitungsrohr (25) verbunden wird, wobei dies typischerweise mittels Eindrehen der Gewindestange (16) in Richtung Grundkörper (9) der Innenrohr-Verklemmung erfolgt,
- Einführen der Rute in die Vorschubeinheit (38) und durch die Gewindestange (16) und den Grundkörper (9) der Innenrohr-Verklemmung in das Leitungsrohr (25), wobei die Vorschubeinheit (38) vor- oder nach dem Einführen der Rute mit der Innenrohr-Verklemmung verbunden wird,
- Anschliessen eines Antriebs, beispielsweise einer Handbohrmaschine, an das Fixierelement (45) der Vorschubeinheit (38) und Betätigen des Antriebs zum Fördern der Rute durch das Leitungsrohr (25).
